# EUROPÄISCHE PATENTSCHRIFT

(11) **EP 0 643 747 B1**
(45) Veröffentlichungstag und Bekanntmachung des Hinweises auf die Patenterteilung: **22.01.1997**
(21) Anmeldenummer: 93911731.3
(22) Anmeldetag: 06.05.1993
(51) Int. Cl.: C09D 11/00, B23K 35/00, B23K 35/22, B23K 35/36

(54) **MARKIERUNGSMITTEL FÜR HOCHTEMPERATURANWENDUNGEN**
MARKING AGENT FOR USE AT HIGH TEMPERATURES
AGENT DE MARQUAGE POUR DES UTILISATIONS A TEMPERATURE ELEVEE

(30) Priorität: 06.05.1992 DE 4214927
(43) Veröffentlichungstag der Anmeldung: 22.03.1995
(73) Patentinhaber: SCHLÖGEL, Anton, D-86971 Peiting (DE)
(72) Erfinder: SCHLÖGEL, Anton, D-86971 Peiting (DE)
(74) Vertreter: Münsterer, Heribert
(86) Internationale Anmeldenummer: DE9300398
(87) Internationale Veröffentlichungsnummer: WO9322388

(56) Entgegenhaltungen:
- EP-A- 0 253 543
- DE-A- 4 035 229

## Beschreibung

Die Erfindung betrifft ein Markierungsmittel zur Erzeugung von Markierungen, die auch unter Hochtemperaturbedingungen noch sichtbar bleiben und die sich insbesondere für Schweißarbeiten eignen.

Bei der Anwendung höherer Temperaturen tritt gemäß dem Stefan-Boltzmannschen Gesetz in Verbindung mit dem Wienschen Verschiebungsgesetz proportional zur vierten Potenz der Temperatur intensive elektromagnetische Strahlung auf, die bis in den UV-Bereich hineinreicht. So ist es z.B. für Schweißarbeiten, sei es mit einem Schweißbrenner, einem Elektroschweißgerät, einem Plasmabrenner oder einem Laser,bei Temperaturen oberhalb von ca. 3000 K wegen der hier intensiv auftretenden, für das menschliche Auge besonders gefährlichen UV-Strahlung unbedingt erforderlich, einen Schutzschirm, eine Schweißerbrille oder eine ähnliche Abschirmmaßnahme zu ergreifen.

Der Schweißer steht hier auch vor dem Problem, daß er bei Beginn der Schweißung die zu schweißende bzw. zu schneidende Naht durch die Schutzvorrichtung kaum wahrnehmen kann, und daß nach Einschalten der Hochtemperaturquelle aufgrund deren Blendwirkung die üblicherweise durch "Anreißen" markierten Linien, wenn überhaupt, nur schwach sichtbar sind. Hierdurch entsteht für den Schweißer die Notwendigkeit, den Schweißvorgang des öfteren zu unterbrechen, um nach Abnahme seiner Schutzvorrichtung den ordnungsgemäßen Gang der Schweißarbeit zu überprüfen, was natürlich die Arbeitsproduktivität senkt.

Lampen hoher Leuchtdichte haben sich in der Praxis nicht bewährt, da der von ihnen benötigte Platz nicht stets vorhanden ist, ein elektrischer Anschluß nicht überall zur Verfügung steht und ihr stetes "Nachführen" umständlich und zeitraubend ist.

Hier will die Erfindung Abhilfe schaffen.

Mittel zur Markierung von Löt- und Schweißstellen sind bereits bekannt; so beschreibt beispielsweise die US-PS 4670298 eine fluoreszierende Lötpaste, die als fluoreszierendes Pigment 4-Methyl-7-dimethylamino-cumarin enthält und bis etwa 200°C eingesetzt werden kann. Aufgrund der mangelnden Temperaturbeständigkeit und leichten Entzündbarkeit des organischen Luminophors kommt der Einsatz dieser Paste bei Temperaturen oberhalb von ca. 200°C allerdings nicht in Frage.

Weiterhin ist aus der DE 3128000 A1 eine Schutzpaste zum Schweißen, insbesondere zum Unterwasserschweißen, bekannt, die einen "Basisstoff" aus einer mit Glyzerin vermischten höheren Fettsäure, einen "Beleuchtungsstoff" in Form von amorphem Phosphor und/oder Magnesium sowie Eisenoxid und/oder Magnesium als Wasserstoffentfernungsmittel enthält. Die Paste weist u.a. den Nachteil auf, daß sie aufgrund der leichten Entzündbarkeit der verwendeten "Beleuchtungsstoffe", insbesondere des Phosphors, nicht für das Schweißen unter normaler Atmosphäre geeignet ist, da hier die kühlende und abschirmende Wirkung (gegen Funkenflug und Bildung giftiger Dämpfe) des Wassers naturgemäß nicht gegeben ist.

Außerdem weisen die verwendeten "Beleuchtungsstoffe" aufgrund ihrer chemischen Natur nur eine geringe Lagerstabilität auf (Autoxidation des amorphen Phosphors!), und es können durch die beim Schweißen entstehenden Oxidationsprodukte (P₄O₁₀ bzw. MgO) Beeinträchtigungen der Schweißnahtqualität nicht ausgeschlossen werden.

Der vorliegenden Erfindung liegt die Aufgabe zugrunde, ein Markierungsmittel für Hochtemperaturanwendung, insbesondere für Schweißarbeiten, zu schaffen, das folgende Anforderungen erfüllt:
a) Die funktionswesentlichen Bestandteile des Markierungsmittels sollten eine Temperaturbeständigkeit von mindestens 500°C aufweisen;
b) das Markierungsmittel sollte auch unter ungünstigen Sichtverhältnissen vor und während des Schweißvorgangs gut sichtbar sein; es sollte insbesondere unter Einfluß des UV-Strahlers eine intensive Lumineszenz auch noch bei höheren Temperaturen aufweisen;
c) bei der thermischen Zersetzung des Markierungsmittels sollten nur geringe Mengen an flüchtigen Zersetzungsprodukten, die überdies möglichst nicht toxisch sein sollten, entstehen, die zudem möglichst von der Schweißschlacke aufgenommen werden sollten;
d) die festen Zersetzungsprodukte des Markierungsmittels sollten die Schweißnahtqualität nicht beeinträchtigen;
e) die Bestandteile des Markierungsmittels sollten chemisch möglichst reaktionsträge sein, um eine ungefährliche Handhabung, auch durch einen chemischen Laien, sowie eine hohe Lagerstabilität zu gewährleisten; und
f) die Bestandteile des Markierungsmittels sollten sich durch niedrige Gestehungskosten auszeichnen.

Diese Aufgabe löst die vorliegende Erfindung primär dadurch, daß das erfindungsgemäße Markierungsmittel neben einem Halftverbessenungsmittel als funktionswesentlichen Bestandteil mindestens einen Hochtemperatur-Luminophor (=Leuchtstoff) aufweist, dessen Zersetzungstemperatur an Luft oberhalb 500°C, vorzugsweise oberhalb 1000°C, besonders bevorzugt oberhalb 1500°C liegt.

Dies hat zum Vorteil, daß die mit dem erfindungsgemäßen Mittel angelegte Markierung selbst bei höheren Temperaturen, wie sie beispielsweise in unmittelbarer Nähe einer Schweißstelle auftreten, noch sichtbar bleibt und auch durch einen etwaigen Funkenregen nicht beeinträchtigt wird.

Für diesen Zweck haben sich vorzugsweise Oxidluminophore von "Lenard"- bzw. vom anorganischen "Reinstoff-Typ" mit einer Emission nach UV-Anregung im sichtbaren Spektralbereich (λ = 400-800 nm) als geeignet erwiesen. Diese werden z.B. zur Verwendung in Leuchtstofflampen und Fernsehbildschirmen im großtechnischen Maßstab erzeugt.

Zu den erfindungsgemäß geeigneten "Lenard-Phosphoren" zählen insbesondere Oxide von seltenen Erden, Sulfide, Selenide, Silicate, Aluminate, Phosphate, Halophosphate, Borate, Germanate, Vanadate, Molybdate und Wolframate von vorzugsweise zweiwertigen Metallen (z.B. Ca, Zn, Sr, Mg, seltene Erden), die mit Spuren von Schwermetall-Ionen (z.B. Bi, Cu, Tl, Al, Mn, Pb, seltene Erden) "aktiviert" sind.

Zu den erfindungsgemäß geeigneten anorganischen "Reinstoff-Phosphoren" sind in erster Linie Wolframate und Molybdate von vorzugsweise zweiwertigen Metallen (z.B. Be, Mg, Ca, Sr, Ba, Zn, Mn) zu rechnen.

Unter Berücksichtigung der oben unter a) bis f) gestellten Anforderungen haben sich die in Tabelle 1 aufgeführten Luminophore als besonders geeignet erwiesen.

**Tab. 1:**

| Bevorzugte Luminophore | | | |
|---|---|---|---|
| Typ* | Chemische Bezeichnung** | Emission*** | Nr. |
| L/G 7/1 | Calciumwolframat | 415 | 1 |
| P/U 716 | BaMg-aluminat:Eu | 447 | 2 |
| O/L 130 | Strontiumborphosphat:Eu | 479 | 3 |
| L/G 9/1 | Magnesiumwolframat | 480 | 4 |
| O/L 131 | Strontiumaluminat:Eu | 490 | 5 |
| P/U 706 | BaMg-aluminat:Eu,Mn | 514 | 6 |
| L/A 5/1 | Zinksilicat:Mn | 525 | 7 |
| R/Grün N | Zinksulfid:Cu | 533 | 8 |
| L/G 71/1 | MgCeTb-aluminat:Ce,Tb | 540 | 9 |
| O/L 175 | Y-aluminiumgranat:Ce | 560 | 10 |
| L/G 14/3 | Ca-fluorchlorphosphat:Sb,Mn | 585 | 11 |
| L/G 17/1 | Calciumsilicat:Pb.Mn | 610 | 12 |
| R/ROT QYO | Yttrium(III)-oxid:Eu | 615 | 13 |
| P/U 468 | Y-vanadatphosphatborat:Eu | 615 | 14 |
| L/G 12/3 | Y-vanadat:Eu | 620 | 15 |
| O/SV 67 | Magnesiumfluorgermanat:Mn | 660 | 16 |

| | | | |
|---|---|---|---|
| * Der 1. Buchstabe bezeichnet den Hersteller: L = Leuchtstoffwerk Heidelberg; O = Osram, München; P = Philips, Eindhoven; R = Riedel-de Haën, Seelze. | | | |
| ** Das nach dem Doppelpunkt angeführte Element bezeichnet den Aktivator. | | | |
| *** Wellenlängenmaximum in nm. | | | |

Von den in der Tabelle 1 aufgeführten Luminophoren ist Y₂O₃:Eu dann besonders bevorzugt, wenn Wert auf höchste Temperaturbeständigkeit gelegt wird (Schmelzpunkt von Y₂O₃: ca. 2680°C ).

Stehen jedoch niedrige Herstellungskosten im Vordergrund des Interesses, sind die Leuchtstoffe Nr. 5 und 6 der Tab.1 besonders bevorzugt, die auch die übrigen oben angeführten Anforderungen a) bis e) in einem besonders ausgewogenen Maße erfüllen, insbesondere hinsichtlich fehlender Toxizität sowie bester Sichtbarkeit (Emissionsmaximum beim Maximum des menschlichen Sehvermögens).

Wird auf eine hohe Quantenausbeute Wert gelegt, ist die Kombination von mindestens drei Leuchtstoffen, beispielsweise die Kombination der Leuchtstoffe Nr. 2, 6 und 16 der Tab. 1, die jeweils im blauen, grünen bzw. roten Teil des elektromagnetischen Spektrums emittieren, besonders bevorzugt. Solche Dreikomponentenmischungen sind auch kommerziell erhältlich, z.B.: der Typ F 36 der Fa. Osram, ein Gemisch aus Calciumhalophosphat:Sb, Strontiummagnesiumorthophosphat:Sn, Zinksilicat:Mn und Magnesiumfluorgermanat:Mn.

Bei einer Lichtquelle von relativ niedriger Temperatur (T≈3000K) kann es von Vorteil sein, den UV-Leuchtstoffen ein Infrarot(IR)-Leuchtpigment beizumischen, dessen Lumineszenz durch IR-Strahlung mit einer Wellenlänge um ca. 1 µm stimuliert werden kann, um so auch den IR-Strahlenanteil der Lichtquelle zu nutzen. Als geeignet hierfür erweisen sich z.B. die IR-Leuchtpigmente auf Erdalkalisulfid-Basis der Fa. Riedel-de Haën, beispielsweise Lumilux ROT UR bzw. U-RF.

Die meisten der in Tabelle 1 aufgeführten Luminophore weisen für Strahlung im Wellenbereich λ = 400-800 nm nur einen relativ schwachen Reflexionsgrad auf. Eine Markierung mit einem Mittel, das nur diese Luminophore enthielte, würde demgemäß nur eine mäßige Sichtbarkeit vor der Bestrahlung mit der UV-Quelle, also beispielsweise vor dem Schweißbeginn, aufweisen. Deshalb ist es bevorzugt, einen "Reflektor" für Strahlung im sichtbaren Bereich zuzusetzen, der den Kontrast der Markierung deutlich erhöht. Als besonders geeignet hierfür hat sich Titandioxid aufgrund seines hohen Schmelzpunkts (1855°C), seiner toxikologischen Unbedenklichkeit sowie seines hohen Reflexionsgrads für Tageslicht erwiesen. Das Titandioxid kann dem erfindungsgemäßen Markierungsmittel allerdings nur in einer beschränkten Konzentration (max. 10 Massen-%, vorzugsweise < 5 Massen-% zugesetzt werden), da ein höherer Gehalt eine zu starke UV-Absorption verursachen würde.

Für die unterschiedlichen Bedürfnisse der Praxis hat es sich als notwendig erwiesen, das erfindungsgemäße Markierungsmittel insbesondere in Form einer relativ niedrigviskosen Flüssigkeit sowie in Form einer relativ hochviskosen verstreichbaren Masse zu formulieren.

Da die erfindungsgemäßen Luminophore und der Reflektor im Wasser und in den für die praktische Anwendung geeigneten organischen Lösungsmitteln schwer löslich sind, können hiervon nur kolloidale Dispersionen (in Form von Solen oder Gelen) hergestellt werden.

Hierfür sind alle festen Komponenten des erfindungsgemäßen Markierungsmittels feingepulvert (max. mittlere Teilchengröße ca. 10 µm, vorzugsweise max. 1 µm) einzusetzen.

Um eine problemlose Herstellung der Dispersion zu ermöglichen, sowie um eine Sedimentation der festen Komponenten schon bei der Herstellung derselben bzw. nach längerer Lagerzeit zu vermeiden, hat es sich als vorteilhaft erwiesen, mindestens ein Dispergiermittel und/oder ein Schutzkolloid zuzusetzen.

Die zur Stabilisierung von hydrophilen bzw. lyophilen Solen (wie im vorliegenden Fall) geeigneten Dispergiermittel bzw. Schutzkolloide sollten eine möglichst hohe Temperaturbeständigkeit aufweisen, über eine möglichst hohe Transparenz im Wellenlängenbereich λ = 300-800 nm verfügen, selbst untoxisch sein, keine giftigen Pyrolyseprodukte liefern sowie preisgünstig sein.

Als besonders geignet im Sinne der voranstehend genannten Erfordernisse hat sich hochdisperse, gefällte oder vorzugsweise pyrogene Kieselsäure (Si02-Gehalt ≥ 99 Massen-%, vorzugsweise ≥ 99.8 Massen-%, Schmelzpunkt > 1500°C) mit einer mittleren Größe der Primärteilchen von ≤ 100 nm, vorzugsweise < 20 nm, erwiesen, da diese sowohl als Dispergator als auch als Schutzkolloid im erfindungsgemäßen Markierungsmittel zu wirken imstande ist.

Bei einem Zusatz von max. 10 Massen-%, vorzugsweise max. 5 Massen-%, Kieselsäure gelingt es, das Entmischen bzw. Sedimentieren der durch eine relativ hohe Dichte (P = ca. 2-6 g/cm³) ausgezeichneten Komponenten des erfindungsgemäßen Markierungsmittels dauerhaft zu vermeiden bzw. eine unproblematische Redispergierung eines evtl. nach sehr langer Lagerzeit bei tiefen Temperaturen auftretenden Sediments zu erreichen. Überdies bewirkt der Kieselsäure-Zusatz eine willkommene Erhöhung der Viskosität des erfindungsgemäßen Markierungsmittels, wirkt also auch im Sinne eines "Verdickungsmittels".

Weiterhin hat es sich als vorteilhaft erwiesen, dem erfindungsgemäßen Markierungsmittel mindestens ein organisches Binde- und/oder Verdickungs- und/oder Haftverbesserungs- und/oder Netzmittel zuzusetzen. Diese sollten unter Einwirkung höherer Temperaturen möglichst unzersetzt verdampfen bzw. sublimieren oder bei einer eventuellen Pyrolyse möglichst wenig toxische und/oder übelriechende Stoffe entwickeln. Weiterhin sollten sie im Wellenlängenbereich λ = 300-800 nm Transparenz aufweisen sowie kostengünstig herzustellen sein.

Als Mittel, die alle o.g. Erfordernisse in befriedigender Weise erfüllen, haben sich Poly(ethylenoxide) (PEO) bzw. Poly(propylenglycole) (PPG) bzw. Poly(ethylenglycole) (PEG), wobei letztere bevorzugt sind, erwiesen.

Sie sind im erfindungsgemäßen Markierungsmittel vielseitig wirksam, indem sie, insbesondere bei Einsatz von PEG mit höherer mittlerer Mol-Masse (> 1000 mol/g) aufgrund ihrer wachsartigen Konsistenz zum einen als Bindemittel wirken, d.h. daß sich - je nach Zusatzmenge an PEO - das erfindungsgemäße Sol über immer höher viskose Zwischenstufen schließlich in ein Gel überführen läßt.

Wird die Herstellung einer verstreichbaren Masse angestrebt, so wirkt andererseits der Zusatz eines relativ niedermolekularen PEO (mittlere Mol-Masse ≤ 500 g/mol) als interner "Weichmacher" und desweiteren als Haftverbesserungsmittel, da die Haftung der Markierung auf glatten bzw. fettigen Oberflächen ohne diesen Zusatz unbefriedigend wäre. Hierbei wird demgemäß auch die bekannte Wirkung der PEO als nichtionische Tenside ausgenutzt.

Weiterhin vermögen die PEO aufgrund ihrer Hydrophilie hydrophile Sole der hier vorliegenden Art zu stabilisieren. Sie können deshalb in synergistischer Wechselwirkung mit dem eingesetzten Dispergator bzw. Schutzkolloid (vorzugsweise der hochdispersen Kieselsäure) als Dispersionsstabilisatoren die Lagerstabilität des erfindungsgemäßen Markierungsmittels weiter erhöhen.

Das erfindungsgemäße Markierungsmittel kann für die verschiedenartigsten Applikationsformen beispielsweise in Form einer "Kreide", einer verstreichbaren pastösen Masse oder einer z.B. mit einem Filzstift, einem Pinsel oder einem Füllfederhalter auftragbaren Flüssigkeit formuliert werden.

Für eine Markierungsflüssigkeit, die sich auch zur Anfertigung sehr dünner Markierungslinien, beispielsweise für feinste Schweißarbeiten, eignet, wird den o.g. Komponenten mindestens ein niedrig siedendes Lösungsmittel (Kp ≤ 120°C) zugesetzt, das rasch verdunsten und möglichst wenig toxisch sein sollte. Als geeignet hierfür haben sich insbesondere niedrige Alkanole, Ketone, Ester und Ether erwiesen, wobei die C₂- und C₃-Alkanole, Aceton, 1,2-Dimethoxyethan sowie Propylencarbonat bevorzugt sind. Besonders bevorzugt sind jedoch Ethanol sowie 1- und 2-Propanol aufgrund ihrer günstigen MAK-Werte.

Je nach gewünschter Applikationsform können die o.b. Bestandteile des erfindungsgemäßen Markierungsmittels in weiten Grenzen variiert werden, wobei sich jedoch folgende Massen-%-Bereiche als vorteilhaft erweisen:
30-70 Luminophor (entweder als Reinstoff oder zur Erzielung von Mischfarben im Gemisch mit einem oder mehreren anderen geeigneten Luminophoren);
1-10 Titandioxid (Rutil-Typ);
1-10 hochdisperse Kieselsäure:
1-60 Poly(ethylenglykol) (vorzugsweise in zwei verschiedenen Molekularmassen-Verteilungen);
0-50 Lösungsmittel;
wobei sich die Bestandteile jeweils zu 100 Massen-% ergänzen.

Das erfindungsgemäße Markierungsmittel weist aufgrund seiner Funktionsfähigkeit auch unter Einwirkung höherer Temperatur den Vorzug auf, daß die mit dem Markierungsmittel ausgeführten Markierungen bis unmittelbar vor den Ort der hohen Temperaturen, beispielsweise in der Nähe eines Lichtbogens, auch unter schwierigen Sichtverhältnissen deutlich erkennbar bleiben. Dies ermöglicht die Anfertigung von Schweißnähten bzw. Schneidgeometrien auch kompliziertester Art in deutlich kürzerer Zeit als nach dem Stand der Technik. Weiterhin ist das Verfolgen feinster Markierungslinien, beispielsweise bei der Anfertigung von kleinen Präzisionsteilen, wie z.B. Schmuckstücken, möglich. Dies führt in der Praxis zu einem deutlich schöneren "Schweißbild" als nach dem Stand der Technik erzielbar.

Im nachfolgenden soll die Erfindung anhand von vier Ausführungsbeispielen näher erläutert werden, wobei anzumerken ist, daß der in den angeführten Beispielen verwendete Leuchtstoff durch einen beliebigen anderen der geeigneten Luminophore ersetzt werden kann.

### Ausführungsbeispiele

### 1) Markierungsflüssigkeit

In einem heizbaren Rührgefäß werden zu 978 g Ethanol (Brennspiritus, 94 Vol-%, vorzugsweise mit 2-Butanon vergällt) 60 g pulverisiertes Poly(ethylenglycol) (mittlere Mol-Masse: 5.600-7.000 g/mol, Lieferant z.B. Hoechst AG, Frankfurt, "PEG 6.000", Erstarrungspunkt: 55-60°C) in kleinen Portionen zugegeben und unter stetigem Rühren solange auf 60-70°C erwärmt, bis sich das PEG vollständig gelöst hat.
In einem separaten Gefäß werden
500 g fein pulverisiertes Bariummagnesiumaluminat: EU,Mn (Philips, U 706),
31 g fein pulverisiertes TiO₂ (Rutil-Typ, Lieferant z.B. Kronos Titan GmbH, Leverkusen, "TiO₂ Kronos RNCX"), sowie
31 g fein gepulverte hochdisperse pyrogene Kieselsäure (≥ 99% SiO₂, Lieferant z.B. Degussa AG, Frankfurt, Typ: Aerosil 200, mittlere Größe der Primärteilchen: 12 nm) gründlich trocken vorgemischt.

Anschließend wird das Pulvergemisch zur warmen ethanolischen PEG-Lösung gegeben und nach Abstellen der Heizung solange gerührt, bis die Lösung Raumtemperatur angenommen hat.

### 2) Markierungsstift

428 g fein pulverisiertes Strontiumaluminat:Eu (Osram, L131)
411 g fein pulverisiertes Poly(ethylenglycol) (PEG 6000),
27 g hochdisperse Kieselsäure (Aerosil 200), sowie
27 g feinpulverisiertes TiO₂ (Kronos RNCX) werden in einem heizbaren Rührgefäß gründlich trocken vorgemischt. Sodann werden
107 g flüssiges Poly(ethylenglycol) (mittlere Mol-Masse: 380-420 g/mol, PEG 400,
Erstarrungspunkt: 4-8°C) im dünnen Strahl hinzugefügt und mit dem Pulvergemenge gründlich vermischt. Anschließend wird das Gemenge auf ca. 70°C erwärmt und solange gerührt, bis eine dünnflüssige Schmelze entstanden ist.

Die derart erhaltene Schmelze kann sodann zur Erzeugung der Markierungsstifte in Hülsen beliebiger Form aus wärmebeständigem Kunststoff (Erweichungstemperatur ≥ 100°C, z.B. Polypropen) vergossen werden, wobei die vergossenen Hülsen anschließend vorzugsweise temperaturkontrolliert abgekühlt werden.

Alternativ kann die erfindungsgemäße Schmelze in rinnenförmige Formen (aus z.B. wärmebeständigem Kunststoff) oder zu dünnen Platten vergossen werden. Die Platten können nach dem Erkalten zu Stiften mit rechteckigem oder quadratischem Querschnitt zerteilt werden, wobei die derart erhaltenen Stifte ebenso wie die aus den rinnenförmigen Formen anschließend in eine passende Hülse überführt bzw. hülsenlos als Nachfüllmaterial in den Handel gebracht werden können.

Weiterhin ist es auch möglich, die erhaltene Schmelze nach dem Abkühlen zu granulieren und das derart erhaltene Granulat in Stiftform endlos zu extrudieren.

### 3) Drei-Komponenten-Leuchtstoffmischung

Der Leuchtstoff gemäß den obigen Beispielen wird durch ein Gemisch der Leuchtstoffe Nr. 2, 6 und 16 der Tab. 1 (je ca. 1/3 der angegebenen Leuchtstoffmenge) ersetzt.

### 4) Leuchtstoffmischung mit IR-Leuchtpigmentanteil

Zu den Leuchtstoffen gemäß den obigen Beispielen wird ein IR-Leuchtpigment, z.B. Lumilux ROT U-RF der Fa. Riedel-de Haën, zu einem Anteil zwischen 10 und 100% der angegebenen Leuchtstoffmenge zugesetzt.

## Patentansprüche

1. Markierungsmittel für Hochtemperaturanwendungen, insbesondere für Schweißarbeiten,
dadurch gekennzeichnet,
daß es mindestens einen Hochtemperatur-Luminophor mit einer Zersetzungstemperatur oberhalb 500°C sowie mindestens ein Haft verbesserungsmittel aufweist.

2. Markierungsmittel nach Anspruch 1,
dadurch gekennzeichnet,
daß der Hochtemperatur-Luminophor ein Oxidluminophor vom Lenard- oder anorganischen Reinstoff-Typ ist.

3. Markierungsmittel nach Anspruch 1 oder 2,
dadurch gekennzeichnet,
daß der Hochtemperatur-Luminophor mindestens einen Leuchtstoff umfaßt, der aus der Gruppe; bestehend aus:
L/G 7/1 Calciumwolframat,
P/U 716 BaMg-aluminat:EU,
O/L 130 Strontiumborphosphat:EU,
L/G 9/1 Magnesiumwolframat,
O/L 131 Strontiumaluminat:Eu,
P/U 706 BaMg-aluminat:Eu,Mn,
L/A 5/1 Zinksilicat:Mn,
R/Grün N Zinksulfid:Cu,
L/G 71/1 MgCeTb-aluminat:Ce,Tb,
O/L 175 Y-aluminiumgranat:Ce,
L/G 14/3 Ca-fluorchlorphosphat:Sb,Mn,
L/G 17/1 Calciumsilicat:Pb,Mn,
R/ROT QYO Yttrium(III)-oxid:Eu,
P/U 468 Y-vanadatphosphatborat:Eu,
L/G 12/3 Y-vanadat:Eu und
O/SV 67 Magnesiumfluorgermanat:Mn,
ausgewählt ist.

4. Markierungsmittel nach einem der Ansprüche 1 bis 3,
dadurch gekennzeichnet,
daß der Hochtemperatur-Luminophor Strontiumaluminat:Eu oder Bariummagnesiumaluminat:Eu,Mn ist.

5. Markierungsmittel nach einem der Ansprüche 1 bis 4,
dadurch gekennzeichnet,
daß es eine Kombination aus mindestens drei Leuchtstoffen, die jeweils im blauen, grünen oder roten Teil des sichtbaren Spektrums der elektromagnetischen Wellen emittieren, umfaßt.

6. Markierungsmittel nach einem der Ansprüche 1 bis 5,
dadurch gekennzeichnet,
daß es zusätzlich mindestens ein IR-Leuchtpigment, dessen Lumineszenz durch IR-Strahlung stimuliert wird, enthält.

7. Markierungsmittel nach einem der Ansprüche 1 bis 6,
dadurch gekennzeichnet,
daß es zusätzlich mindestens einen Stoff mit einem hohen Reflexionsgrad für Strahlung im Wellenlängenbereich λ = 400-800 nm enthält.

8. Markierungsmittel nach einem der Ansprüche 1 bis 7,
dadurch gekennzeichnet,
daß es Titandioxid umfaßt.

9. Markierungsmittel nach einem der Ansprüche 1 bis 8,
dadurch gekennzeichnet,
daß es in Form eines Sols oder Gels vorliegt.

10. Markierungsmittel nach einem der Ansprüche 1 bis 9,
dadurch gekennzeichnet,
daß es mindestens ein Dispergiermittel und/oder Schutzkolloid umfaßt.

11. Markierungsmittel nach einem der Ansprüche 1 bis 10,
dadurch gekennzeichnet,
daß es hochdisperse Kieselsäure enthält.

12. Markierungsmittel nach einem der Ansprüche 1 bis 11,
dadurch gekennzeichnet,
daß es mindestens ein Binde- und/oder Verdickungs- und/oder Netzmittel umfaßt.

13. Markierungsmittel nach einem der Ansprüche 1 bis 12,
dadurch gekennzeichnet,
daß es mindestens ein Poly(ethylenoxid) enthält.

14. Markierungsmittel nach einem der Ansprüche 1 bis 12,
dadurch gekennzeichnet,
daß es mindestens ein Poly(ethylenglycol) umfaßt.

15. Markierungsmittel nach einem der Ansprüche 1 bis 14,
dadurch gekennzeichnet,
daß es mindestens ein niedrig siedendes Lösungsmittel (Siedepunkt ≤ 120°C) enthält.

16. Markierungsmittel nach einem der Ansprüche 1 bis 15,
dadurch gekennzeichnet,
daß es mindestens ein C₂- und/oder C₃-Alkanol umfaßt.

17. Markierungsmittel nach einem der Ansprüche 1 bis 16,
dadurch gekennzeichnet,
daß es folgende Bestandteile (in Massen-%) enthält:
30-60 Hochtemperatur-Luminophor (rein oder im Gemisch mit einem oder mehreren Luminophoren);
1-10 Titandioxid;
1-10 hochdisperse Kieselsäure;
1-60 Poly(ethylenglycol);
0-50 Lösungsmittel (Siedepunkt ≤ 120°C);
wobei sich die Einzelbestandteile jeweils zu 100% ergänzen.

18. Markierungsmittel nach einem der Ansprüche 1 bis 17,
dadurch gekennzeichnet,
daß es in Form einer Flüssigkeit vorliegt, die folgende Bestandteile (jeweils in Massen-%) umfaßt:
40-60 Hochtemperatur-Luminophor (rein oder im Gemisch mit anderen Luminophoren);
1-5 Titandioxid;
1-5 hochdisperse Kieselsäure;
1-10 Poly(ethylenglycol) (mittlere Mol-Masse: ca. 6000 g/mol);
20-40 Lösungsmittel (Siedepunkt ≤ 120°C);
wobei sich die Einzelbestandteile jeweils zu 100% ergänzen.

19. Markierungsmittel nach einem der Ansprüche 1 bis 17,
dadurch gekennzeichnet, daß es in Form einer verstreichbaren Masse vorliegt, die folgende Bestandteile (jeweils in Massen%) umfaßt:
30-50 Hochtemperatur-Luminophor (rein oder im Gemisch mit mindestens einem anderen Luminophor);
1-5 Titandioxid;
1-5 hochdisperse Kieselsäure;
30-50 Poly(ethylenglycol) (mittlere Mol-Masse: ca. 6000 g/mol);
5-15 Poly(ethylenglycol) (mittlere Mol-Masse: ca. 400 g/mol);
wobei sich die Einzelbestandteile jeweils zu 100% ergänzen.

20. Verwendung von Hochtemperaturluminophoren mit einer Zersetzungstemperatur oberhalb 500°C oder Mischungen derselben in Markierungsmitteln für Hochtemperaturanwendungen.

## Claims

1. Marking agent for use at high temperatures, in particular those encountered in welding, characterised in that the agent includes at least one high temperature luminophore with a decomposition temperature of more than 500°C and at least one coupling agent.

2. Marking agent as claimed in claim 1, characterised in that the high-temperature luminophore is an oxide luminophore of the Lenard type or of the inorganic Reinstoff type.

3. Marking agent as claimed in claim 1 or 2, characterised in that the high-temperature luminophore comprises one or more luminophores, chosen from the group consisting of:
L/G 7/1 calcium tungstate,
P/U 716 BaMg-aluminate:Eu,
O/L 130 strontium borophosphate:Eu,
L/G 9/1 magnesium tungstate,
O/L 131 strontium aluminate:Eu,
P/U 706 BaMg-aluminate:Eu,Mn,
L/A 5/1 zink silicate:Mn,
R/green N zink sulfide:Cu,
L/G 71/1 MgCeTb-aluminate:Ce,Tb,
O/L 175 Y-aluminium granate:Ce,
L/G 14/3 Ca-fluorochlorophosphate:Sb,Mn,
L/G 17/1 calcium silicate:Pb,Mn,
R/red QYO yttrium(III)oxide:Eu,
P/U 468 Y-vanadatephosphateborate:Eu,
L/G 12/3 Y-vanadate:Eu, and
O/SV 67 magnesium fluorogermanate:Mn.

4. Marking agent as claimed in any one of claims 1 to 3, characterised in that the high-temperature luminophore is strontium aluminate:Eu or barium magnesium aluminate:Eu,Mn.

5. Marking agent as claimed in any one of claims 1 to 4, characterised by comprising a combination of three or more luminophores emitting in the blue, green or red part, respectively, of the visible spectrum of the electromagnetic waves.

6. Marking agent as claimed in any one of claims 1 to 5, characterised by including additionally at least one IR-luminophore, the luminesence of which is excitable by IR-radiation.

7. Marking agent as claimed in any one of claims 1 to 6, characterised by including additionally at least one substance with a high reflectance for radiation in the wave range λ = 400 to 800 nm.

8. Marking agent as claimed in any one of claims 1 to 7, characterised by comprising titanium dioxide.

9. Marking agent as claimed in any one of claims 1 to 8, characterised in that the agent is in the status of a sol or a gel.

10. Marking agent as claimed in any one of claims 1 to 9, characterised by comprising at least one dispersing agent and/or at least one protective colloid.

11. Marking agent as claimed in any one of claims 1 to 10, characterised by containing microdispersed silicic acid.

12. Marking agent as claimed in any one of claims 1 to 11, characterised by comprising at least one binding agent and/or one or more thickening agent and/or at least one surface-active agent.

13. Marking agent as claimed in any one of claims 1 to 12, characterised by containing at least one poly(ethylene oxide).

14. Marking agent as claimed in any one of claims 1 to 12, characterised by comprising at least one poly(ethylene glycol).

15. Marking agent as claimed in any one of claims 1 to 14, characterised by containing at least one low-boiling solvent (boiling point ≤ 120°C).

16. Marking agent as claimed in any one of claims 1 to 15, characterised by comprising at least one C₂- and/or C₃-alkanol.

17. Marking agent as claimed in any one of claims 1 to 16, characterised by containing the following components (in percent by weight, in each case supplementing to 100%):
30-60 a high-temperature luminophore (pure or in a mixture of several luminophores);
1-10 titanium dioxide;
1-10 microdispersed silicic acid;
1-60 poly(ethylene glycol);
0-50 solvent (boiling point ≤ 120°C).

18. Marking agent as claimed in any one of claims 1 to 17, characterised in that the agent is in the status of a fluid comprising the following components (in percent by weight, in each case supplementing to 100%):
40-60 a high-temperature luminophore (pure or in a mixture with other luminophores);
1-5 titanium dioxide;
1-5 microdispersed silicic acid;
1-10 poly(ethylene glycol) (medium molar mass: ca. 6000 g/mol);
20-40 solvent (boiling point ≤ 120°C);

19. Marking agent as claimed in any one of claims 1 to 17, characterised in that the agent is in the status of a brushable composition comprising the following components (in percent by weight, in each case supplementing to 100%):
30-50 a high-temperature luminophore (pure or in mixture with at least one other luminophore);
1-5 titanium dioxide;
1-5 microdispersed silicic acid;
30-50 poly(ethylene glycol) (medium molar mass: ca. 6000 g/mol);
5-15 poly(ethylene glycol) (medium molar mass: ca. 400 g/mol).

20. Use of high-temperature luminophores with a decomposition temperature of more than 500°C or mixtures of them in marking agents for use at high temperatures.

## Revendications

1. Agent de marquage pour des applications à haute température, en particulier pour des travaux de soudure, caractérisé en ce qu'il comporte au moins un luminophore à haute température présentant une température de décomposition supérieure à 500°C, ainsi qu'au moins un agent d'amélioration d'adhésion.

2. Agent de marquage selon la revendication 1, caractérisé en ce que le luminophore à haute température est un luminophore d'oxyde du type Lenard ou du type substance pure inorganique.

3. Agent de marquage selon l'une ou l'autre des revendications 1 et 2, caractérisé en ce que le luminophore à haute température comporte au moins un luminophore choisi parmi le groupe constitué par :
L/G 7/1 wolframate de calcium ;
P/U 716 BaMg-aluminate : Eu ;
O/L 130 borophosphate de strontium : Eu ;
L/G 9/1 wolframate de magnésium ;
O/L 131 aluminate de strontium : Eu ;
P/U 706 Ba-Mg-aluminate : Eu, Mn ;
L/A 5/1 silicate de zinc : Mn ;
R/vert N sulfure de zinc : Cu ;
L/G 71/1 MgCeTb-aluminate: Ce, Tb ;
O/L 175 Y-grenat d'aluminium : Ce ;
L/G 14/3 Ca-fluorochlorophosphate: Sb, Mn;
L/G 17/1 silicate de calcium : Pb, Mn ;
R/rouge QYO oxyde yttreux : Eu ;
P/U 468 Y-borate de phosphate de vanadate : Eu ;
L/G 12/3 Y-vanadate : Eu ; et
O/SV 67 fluorogermanate de magnésium : Mn.

4. Agent de marquage selon l'une quelconque des revendications 1 à 3, caractérisé en ce que le luminophore à haute température est de l'aluminate de strontium : Eu ou de l'aluminate de magnésium de baryum : Eu, Mn.

5. Agent de marquage selon l'une quelconque des revendications 1 à 4, caractérisé en ce qu'il comporte une combinaison d'au moins trois luminophores qui émettent des ondes électromagnétiques respectivement dans la partie bleue, verte ou rouge du spectre visible.

6. Agent de marquage selon l'une quelconque des revendications 1 à 5, caractérisé en ce qu'il comporte au moins un pigment lumineux infrarouge dont la luminescence est stimulée par un rayonnement infrarouge.

7. Agent de marquage selon l'une quelconque des revendications 1 à 6, caractérisé en ce qu'il comporte en supplément au moins une substance présentant un degré de réflexion élevé pour un rayonnement dans la plage de longueur d'onde 1= 400 à 800 nm.

8. Agent de marquage selon l'une quelconque des revendications 1 à 7, caractérisé en ce qu'il comporte du dioxyde de titane.

9. Agent de marquage selon l'une quelconque des revendications 1 à 8, caractérisé en ce qu'il se présente sous forme d'un sol ou d'un gel.

10. Agent de marquage selon l'une quelconque des revendications 1 à 9, caractérisé en ce qu'il comporte au moins un agent dispersant et/ou un colloïde protecteur.

11. Agent de marquage selon l'une quelconque des revendications 1 à 10, caractérisé en ce qu'il comporte un acide silicique hautement dispersé.

12. Agent de marquage selon l'une quelconque des revendications 1 à 11, caractérisé en ce qu'il comporte au moins un liant et/ou un épaississant et/ou un agent mouillant.

13. Agent de marquage selon l'une quelconque des revendications 1 à 12, caractérisé en ce qu'il comporte au moins un poly(éthylèneoxyde).

14. Agent de marquage selon l'une quelconque des revendications 1 à 12, caractérisé en ce qu'il comporte au moins un poly(éthylèneglycol).

15. Agent de marquage selon l'une quelconque des revendications 1 à 14, caractérisé en ce qu'il comporte au moins un solvant à bas point d'ébullition (point d'ébullition ≤ 120° C).

16. Agent de marquage selon l'une quelconque des revendications 1 à 15, caractérisé en ce qu'il comporte au moins un alcanol C2 et/ou C3.

17. Agent de marquage selon l'une quelconque des revendications 1 à 16, caractérisé en ce qu'il comporte les composantes suivantess (en pourcentage de masse) :
30 à 60 de luminophore à haute température (pur ou en mélange avec un ou plusieurs luminophores)
1 à 10 de dioxyde de titane
1 à 10 d'acide silicique hautement dispersé
1 à 60 de poly(éthylèneglycol)
0 à 50 de solvant (point d'ébullition < 120° C)
dans lequel les composantes individuelles se complètent respectivement à 100 %.

18. Agent de marquage selon l'une quelconque des revendications 1 à 17, caractérisé en ce qu'il se présente sous forme d'un liquide présentant les composantes suivantes (respectivement en pourcentage de masse) :
40 à 60 de luminophore à haute température (pur ou en mélange avec d'autres luminophores)
1 à 5 de dioxyde de titane
1 à 5 d'acide silicique hautement dispersé
1 à 10 de poly(éthylèneglycol) (masse molaire moyenne environ 6000 g/mole)
20 à 40 de solvant (point d'ébullition ≤ 120° C)
dans lequel les composantes individuelles se complètent respectivement à 100 %.

19. Agent de marquage selon l'une quelconque des revendications 1 à 17, caractérisé en ce qu'il se présente sous forme d'une masse à étaler présentant les composantes suivantes (respectivement en pourcentage de masse):
30 à 50 de luminophore à haute température (pur ou en mélange avec au moins un autre luminophore)
1 à 5 de dioxyde de titane
1 à 5 d'acide silicique hautement dispersé
30 à 50 de poly(éthylèneglycol) (masse molaire moyenne environ 6000 g/mole)
5 à 15 poly(éthylèneglycol) (masse molaire moyenne environ 400 g/mole)
dans lequel les composantes individuelles se complètent respectivement à 100 %.

20. Utilisation de luminophores à haute température présentant une température de décomposition supérieure à 500°C, ou de mélanges de ceux-ci dans les agents de marquage pour des applications à température élevée.
